# EUROPEAN PATENT APPLICATION

(11) **EP 3 323 787 A1**
(43) Date of publication of application: **23.05.2018**
(21) Application number: 17202168.5
(22) Date of filing: 16.11.2017
(51) Int. Cl.: C01F 7/02, C22B 7/00

(54) **METHOD OF REDUCING THE AMMONIA EMISSION FROM SECONDARY ALUMINIUM OXIDE**

(30) Priority: 21.11.2016 GB 201619633
(71) Applicant: Ballon, Oliver, 40721 Hilden (DE)
(72) Inventor: Ballon, Oliver, 40721 Hilden (DE)
(74) Representative: Michalski Hüttermann & Partner Patentanwälte mbB

(57) **Abstract**

A method of reducing the ammonia emission from an aluminium oxide comprises the step of contacting secondary aluminium oxide with a zeolite. Preferably the zeolite is a used or unused fluid catalytic cracking (FCC) catalyst such as zeolite Y. The invention also relates to a mixture comprising secondary aluminium oxide and a zeolite, wherein the zeolite is a used or unused fluid catalytic cracking (FCC) catalyst and that the composition has a gaseous ammonia emission of ≤ 1 mg NH₃ per gram of composition and hour. Lastly, the invention is directed towards the use of a zeolite for reducing the ammonia emission from secondary aluminium oxide.

## Description

Recycled aluminium is known as secondary aluminium. Recycling involves melting the scrap, a process that requires only a small percentage of the energy used to produce aluminium from ore, though a significant part may be lost as dross, an ash-like oxide. The dross can undergo a further process to extract aluminium. In furnaces operating without a protective salt layer a considerable amount of atmospheric nitrogen may be bound as nitride during cooling of the aluminium. The amount may be up to 15% nitride.

High-alumina raw materials with an Al₂O₃ content of 50 to 80 percent are available either as natural raw materials (such as bauxite, sillimanite, kyanite and andalusite) or are synthetically produced by chemical processing of bauxite into pure alumina followed by sintering or melting (as is the case for mullite and spinel). In the interest of conserving natural resources, there is a growing trend towards using secondary raw materials that are recovered from waste materials which occur as by-products of recycling processes.

Aluminium salt slag is generated as a by-product in the production or recycling of aluminium metal. In this process, the surface of the molten metal is covered with a layer of salt (for example a mixture of 70 percent NaCl, 28 percent KC1 and 2 percent CaF₂). The purpose of the salt layer is to minimize the oxidation of the metal and to absorb oxidic impurities in the form of a salt slag. The salt slag contains about 20-40 percent salt, 50-65 percent oxides and 5 to 10 percent metallic aluminium. As aluminium during melting in air does not only combine with oxygen but also with nitrogen, a salt slag also contains aluminium nitride in addition to aluminium oxide.

A review article on aluminium salt slag characterization and utilization has been published by P.E. Tsakiridis in the Journal of Hazardous Materials 217-218 (2012) 1-10.

In order to recover the components as completely as possible, the salt slag is subjected to a treatment in which most of the metal can be mechanically recovered after crushing and screening the salt slag. Subsequently, the salt slag is treated with water and the salt is dissolved. After separating the insoluble components the salt is crystallized by evaporating the solution and is thus made available again for the aluminium-melting process described above.

The secondary aluminium oxide product contains about 50-80 percent Al₂O₃. According to M. Beckmann (Aluminium 67 [1991] 586-593), the Al₂O₃ is present in the mineralogical form of corundum alpha-Al₂O₃, spinel MgAl₂O₄ and aluminium tri-hydroxide beta-Al₂O₃ · 3 H₂O (bayerite). Aluminium tri-hydroxide is formed in the wet treatment of salt slag by the reaction of water with aluminium or aluminium nitride according to the following exothermic equations:

2A1 + 6 H₂O → Al₂O₃ · 3 H₂O + 3 H₂

2 A1N + 6 H₂O → Al₂O₃ · 3 H₂O + 2 NH₃

The continuous formation of hydrogen gas in closed spaces may lead to an explosive gas mixture. Furthermore, the formation of ammonia gas above the olfactory threshold (1-5 ppm) will present additional work hygiene challenges.

In a practical wet treatment process, the particle size to which the salt slag is crushed and the reaction time are set according to economic criteria with the result that the alumina product can have a residual content of as much as 5 percent aluminium metal and aluminium nitride.

The secondary aluminium oxide product is taken out of the wet treatment process as a sludge filtrate in cake form (in most cases with a water content of about 30-45 percent, not in a suitable form for transporting or for measuring out controlled quantities, and with a strong odour of ammonia). The secondary aluminium product having such moisture levels may exhibit thixotropic behaviour, i.e. a liquefaction under vibration. The outwardly dry appearing material could transform into a liquefied paste by the vibrations associated with its transport in road vehicles or cargo ships. The maximum water content of the material suitable for transport is denoted the "flow moisture point" (FMP) or "transport moisture limit" (TML) and is around 25% for the secondary aluminium oxide product.

The unfavourable consistency and the residual content of aluminium metal and aluminium nitride are a considerable drawback associated with using the alumina product, particularly for producing sintered or fused materials. In the further processing of the product (mixing with other mineral materials, drying, calcining, sintering, melting) the following difficulties occur, some of which represent major problems:
- Exposure of workers to malodorous ammonia vapours during handling;
- Strong thermal reaction and release of gas (water vapour, H₂, NH₃) when mixing the product with quicklime and cement, resulting in poor mechanical strength of moulded bodies (for example pellets and briquettes);
- Corrosion of equipment caused by release of gas;
- Risk of explosion caused by release of gas;
- Accumulations attaching themselves and forming mechanical obstructions in the machinery and transport paths;
- Difficult to control local temperature variations, specifically overheating of rotary kilns used in sintering processes due to uncontrolled thermal reactions of the aluminium metal and the aluminium nitride, resulting in undesirable melting, baked-on material accumulations and formation of lumps.

Aluminium oxide obtained from the work-up of salt slag needs additional treatment or modification before it can be handed over to customers. One example is the reduction of the moisture content of the material. A standard approach is the autogenic drying in which the heat formation of the aforementioned exothermic reactions is used to dry the material and to eliminate ammonia. After the reacting composition has reached a certain temperature it is turned over using heavy machinery and fumes are extracted. This is repeated until the material has a residual moisture content of 25%. The reactions leading to ammonia and hydrogen gas formation are not completed but proceed at such a slow rate that the material may be shipped to a customer using the appropriate safety precautions.

The time necessary for the autogenic drying procedure may be reduced by adding lime, using a drying apparatus or spraying the oxide with NaOH solution in a slowly revolving reaction cylinder.

In all of these processes gases which need to be treated and disposed of properly are produced. Owing to environmental and safety regulations a large investment in equipment and additional, constant cost expenditures are required.

Numerous attempts have been made to address these problems. EP 2 105 412 A1 for example discloses high alumina compositions containing (wt%): alumina 50-90; magnesium oxide 1-20; silica 0.5-15; aluminium nitride 0.1-15; ferric oxide 0.1-5; calcium oxide 0.1-7; fluorine 0.1-10; sodium oxide 0.1-6; potassium oxide 0.1-2; aluminium 0.1-10; silicon 0.1-3; iron 0.1-3; loss on ignition 0.1-15 and remaining materials 5 max. The main mineral components are bayerite, boehmite, corundum and spinel. Moisture content is 10 wt% max and 90% of the particles are below 500 µm. The specific surface is more than 50 m²/g and the average pore diameter less than 100 angstroms. An independent claim is included for a method for producing the raw material comprising: (A) dry milling an aluminium salt slag containing 20-60 wt% of NaCl, KC1, CaF₂, 35-75 wt% of Al₂O₃, MgO or SiO₂ and up to 15% of both metallic aluminium and aluminium nitride and, after adding water, mill dot produce a suspension containing 25-55 wt% solids, at least 90 wt% of which has particle size below 500 µm, the average particle being below 50 µm; (B) the suspension is treated in a reactor fitted with a stirrer at a pH of 9-12 and 30-90 °C for 10-60 minutes, producing aluminium hydroxide by reaction of metallic aluminium and aluminium nitride with water, liberating hydrogen and ammonia and forming a salt sol which is made alkaline by the ammonia; (C) filtering the product, washing the filter cake and spraying it with water to remove salts and sucking air through it to adjust its moisture content to 30-50 wt%; and (D) drying the product at 70-110 °C to a residual moisture content of less than 10 wt%.

EP 2 105 426 A1 describes a honeycomb structure comprising a pillar honeycomb unit having plural cells extending from a first end face to a second end face of the honeycomb structure and partitioned by cell walls formed in a longitudinal direction of the honeycomb structure. The cell walls include a NOₓ adsorbing material and an inorganic binder, and an ammonia adsorbing material is supported on the cell walls, wherein an amount of the ammonia adsorbing material supported on the cell walls is varied between the first end portion and the second end portion. The NOₓ adsorbing material may include ceria, and the ammonia adsorbing material may include zeolite.

WO 2015/062819 A1 concerns a self-foaming geopolymer composition comprising at least one hydraulic binder; at least one binder selected from latent hydraulic binders, pozzolanic binders, and mixtures thereof; at least one alkaline activator; and aluminium dross. The pozzolanic binder may be selected from amorphous silica, preferably precipitated silica, pyrogenic silica and microsilica, ground glass, fly ash, preferably brown-coal fly ash and mineral-coal fly ash, metakaolin, natural pozzolanas such as tuff, trass and volcanic ash, natural and synthetic zeolites, and mixtures thereof.

The present invention has the object of providing a way to use or at least safely handle secondary aluminium oxide or other aluminium oxide-containing compositions which additionally contain metal nitrides as a raw material in manufacturing while avoiding the associated drawbacks of the reaction of the compositions with water.

This object is achieved by a method according to claim 1, a mixture according to claim 7 and a use according to claim 10. Advantageous embodiments are described in the dependent claims. They may be combined freely unless the context clearly indicates otherwise.

A method of reducing the ammonia emission from an aluminium oxide composition, wherein the aluminium oxide composition has an Al₂O₃ content of ≥ 50 weight-% of dry matter and a metal nitride content of ≥ 0.01 weight-% of dry matter, comprises the step of contacting the aluminium oxide composition aluminium with a zeolite, thereby obtaining a mixture of the aluminium oxide composition and the zeolite.

Examples for zeolites in the method, composition and use according to the present invention include zeolite beta, zeolite Y, zeolite omega, ZSM-5, ZSM-12, MCM-22, MCM-36, MCM-49, MCM-56, MCM-58, MCM-68, Faujasite and Mordenite. The zeolite is preferably an acidic zeolite, i.e. a zeolite with a pH (DN EN ISO 10523) of < 7. Particularly preferred are zeolites with a pH (DIN EN ISO 10523) of ≤ 6, even more preferred ≤ 5. Furthermore, it is preferred that the d₈₀ value (DIN EN 933) of the particle size distribution of the zeolite is ≤ 100 µm, more preferred ≥ 1 µm to ≤ 10 µm. The zeolite may contain rare earth elements as dopants, such as La and/or Ce. They may serve to enhance the acidity of the zeolite.

Examples for preferred zeolites include acidic zeolites such as the aluminosilicate zeolites having a relatively high silica and low alumina content with the aluminium sites being acidic. The acidity is believed to be due to substitution of Al³⁺ in place of the tetrahedral Si⁴⁺ in the structure. Preferred silica to alumina molar ratios (SiO₂/Al₂O₃) of the zeolite are ≥ 5 moles (i.e., ≥ 5 SiO₂ per mole Al₂O₃) to ≤ 280 moles SiO₂ per mole Al₂O₃. Within this range, a SiO₂/Al₂O₃ molar ratio of greater than or equal to 30 is preferred, with a SiO₂/Al₂O₃ molar ratio of greater than or equal to 50 being more preferred. Examples of especially suitable acidic zeolites include ZSM-5, zeolite Y, beta zeolite beta and the like, and combinations comprising one or more of the foregoing zeolites.

The method according to the invention has several additional advantages. By mixing the aluminium oxide composition with the zeolite the moisture of the mixture can be held below the transport moisture limit (TML). Ammonia dissolved in the interstitial water of the aluminium oxide can be absorbed. Customer specifications for elements such as Cl, F, alkalines (Na₂O, K₂O) and heavy metals can be met and the product specification under regulatory aspects can be retained. Lastly, zeolites are widely available and make the method economically attractive.

The aluminium oxide composition used in the method, composition and use according to the invention may be obtained by:
- separating aluminium metal from aluminium salt slag, thereby obtaining a metal-depleted salt slag; and
- treating the metal-depleted salt slag with water and separating a liquid phase and a water-insoluble residue obtained thereby.

The water-insoluble residue may be described as a secondary aluminium oxide product. This has the advantage that a substance already certified for numerous applications such as a cement additive is used and regulatory issues are simplified.

In an embodiment of the method according to the invention the aluminium oxide composition is a particulate solid with a d₈₀ value of the particle size distribution of ≤ 500 µm and/or the aluminium oxide composition has a content of metallic aluminium of ≤ 5 weight-% of dry matter.

The aluminium oxide composition used in the method, mixture and use according to the invention is preferably a particulate solid with a d₈₀ value of the particle size distribution of ≤ 500 µm, an Al₂O₃ content of ≥ 50 weight-% of dry matter, a metal nitride content of ≥ 0.01 weight-% of dry matter and a content of metallic aluminium of ≤ 5 weight-% of dry matter.

The particle size distribution may be determined in accordance with the norm DIN EN 933. It is preferred that the d₈₀ value is ≥ 100 µm to ≤ 500 µm, more preferred ≥ 200 µm to ≤ 400 µm.

In the context of the present invention the Al₂O₃ content of a component represents a sum parameter from the contents of aluminium oxide and hydroxide species such as amorphous aluminium oxide, corundum, bayerite, boehmite, gibbsite, nordstrandite and spinel. The total content can be determined in an X-ray fluorescence spectroscopy measurement. Dry matter may be obtained by heating the samples to 105 °C until no further weight loss is observed. Preferably this Al₂O₃ content is ≥ 60 to ≤ 80 weight-% of dry matter, more preferred ≥ 65 to ≤ 75 weight-% of dry matter.

The aluminium oxide composition used in the method, mixture and use according to the invention also comprises metal nitride such as aluminium nitride and/or silicon nitride, a fact which is expressed by a minimum content for the metal nitrides of ≥ 0.01 weight-% of dry matter. The nitride content can be determined from the nitrogen content according to DIN 51732. Preferably, the nitrogen content is used to calculate a metal nitride content as aluminium nitride. A further example for a metal nitride content is ≥ 0.01 weight-% to ≤ 5 weight-% of dry matter.

The aluminium oxide composition preferably used in the method, mixture and use according to the invention may comprise metallic aluminium, however preferably only up to ≤ 5 weight-% of dry matter as most aluminium should have been recovered in preceding treatment steps. The metallic aluminium content may be determined according to DIN EN ISO 11885. Preferably the content is ≥ 0 to ≤ 5 weight-% of dry matter, more preferred ≥ 0 to ≤ 3 weight-% of dry matter.

The aluminium oxide composition preferably used in the method, mixture and use according to the invention may have the following properties with respect to dry matter, the sum of the weight percentages stated being ≤ 100 weight-%:

| | |
|---|---|
| Al₂O₃ content | ≥ 60 to ≤ 80 weight-% of dry matter |
| SiO₂ content | ≥ 3 to ≤ 10 weight-% of dry matter |
| CaO content | ≥ 1 to ≤ 10 weight-% of dry matter |
| MgO content | ≥ 3 to ≤ 10 weight-% of dry matter |

and/or the moisture content of the aluminium oxide composition is ≥ 20 to ≤ 30 weight-%.

The moisture content may be determined by the weight difference before and after heating the samples to 105 °C until no further weight loss is observed. SiO₂, CaO and MgO content may be determined by X-ray fluorescence spectroscopy.

Preferred are:

| | |
|---|---|
| Al₂O₃ content | ≥ 65 to ≤ 75 weight-% of dry matter |
| SiO₂ content | ≥ 4 to ≤ 9 weight-% of dry matter |
| CaO content | ≥ 2 to ≤ 9 weight-% of dry matter |
| MgO content | ≥ 4 to ≤ 9 weight-% of dry matter |

More preferred are:

| | |
|---|---|
| Al₂O₃ content | ≥ 67 to ≤ 73 weight-% of dry matter |
| SiO₂ content | ≥ 5 to ≤ 8 weight-% of dry matter |
| CaO content | ≥ 3 to ≤ 8 weight-% of dry matter |
| MgO content | ≥ 5 to ≤ 8 weight-% of dry matter |

The method according to the invention may be performed until the resulting mixture has a pH (DIN EN ISO 10523) of ≥ 7 to ≤ 10, preferably ≥ 8 to ≤ 9.

In another embodiment of the method according to the invention the obtained mixture is stored for a time of ≥ 1 hour. After this time the mixture may be processed further, for example in the production of cement or mineral wool. As the method according to the invention leads to a storage-stable mixture, this storage time may also be ≥ 1 day or ≥ 30 days.

In another embodiment of the method according to the invention the obtained mixture has a moisture content of ≥ 1 weight-%. Preferably the moisture content is ≥ 10 to ≤ 20 weight-%.

In another embodiment of the method according to the invention the zeolite is distributed within the aluminium oxide composition. This may be achieved by mixing the materials thoroughly. Particularly preferred is an intensive mixing, the energy transfer of which into the composition being beneficial in breaking up aluminium oxide aggregates present after autogenic drying.

In another embodiment of the method according to the invention the weight ratio of aluminium oxide composition to the zeolite is ≥ 1:1 to ≤ 10000:1. Preferred is a weight ratio of aluminium oxide composition to the zeolite of ≥ 1:1 to ≤ 100:1, more preferred ≥ 1:1 to ≤ 5:1, even more preferred ≥ 1:1 to ≤ 2:1.

In another embodiment of the method according to the invention the zeolite is a used or unused fluid catalytic cracking (FCC) catalyst. FCC catalysts are widely available. Even used catalysts which otherwise would be discarded may be used in the present invention. Without wishing to be bound by theory it is believed that hydrocarbon residues present in the used FCC catalyst additionally serve to shield A1N regions in the particles of the aluminium oxide composition from moisture.

In another embodiment of the method according to the invention the zeolite is zeolite Y.

Another aspect of the present invention is a mixture comprising an aluminium oxide composition, and a zeolite, wherein the aluminium oxide composition has an Al₂O₃ content of ≥ 50 weight-% of dry matter and a metal nitride content of ≥ 0.01 weight-% of dry matter and wherein the zeolite is a used or unused fluid catalytic cracking catalyst and the composition has a gaseous ammonia emission of ≤ 5 mg (preferably ≤ 1 mg, more preferred ≤ 0.1 mg, even more preferred ≤ 0.01 mg) NH₃ per gram of composition and hour. The ammonia emission may be determined by placing a sample in a gas collecting tube for 24 h and photometrically measuring the ammonia present according to the method VDI 3878 (VDI: Verein Deutscher Ingenieure, Association of German Engineers). The weight ratio of aluminium oxide composition to the zeolite may be ≥ 1:1 to ≤ 10000:1. Preferred is a weight ratio of aluminium oxide composition to the zeolite of ≥ 1:1 to ≤ 100:1, more preferred ≥ 1:1 to ≤ 5:1, even more preferred ≥ 1:1 to ≤ 2:1.

In an embodiment of the mixture according to the invention the aluminium oxide composition is a particulate solid with a d₈₀ value of the particle size distribution of ≤ 500 µm and/or the aluminium oxide composition has a content of metallic aluminium of ≤ 5 weight-% of dry matter.

In another embodiment of the mixture according to the invention the zeolite is zeolite Y.

In another embodiment of the mixture according to the invention the mixture has the following properties:

| | |
|---|---|
| Moisture | ≥ 10 to ≤ 20 weight-% |
| Al₂O₃ content (dry matter) | ≥ 40 to ≤ 60 weight-% |
| Chloride content (dry matter) | ≤ 0.5 weight-% |
| Fluoride content (dry matter) | ≤ 0.8 weight-% |
| Alkaline content (dry matter) | ≤ 2 weight-% |

The chloride and fluoride content can be determined according to DIN EN ISO 10304-1. Such low chloride and fluoride contents have the advantage that caking of the composition in machinery parts when the composition is used in the production of cement is reduced or avoided and that gas purification systems in this process are not burdened with fluorine. Alkaline content (as K₂O and Na₂O) can be determined from dried samples via X-ray fluorescence spectroscopy.

Preferably the properties are:

| | |
|---|---|
| Moisture | ≥ 11 to ≤ 18 weight-% |
| Al₂O₃ content (dry matter) | ≥ 42 to ≤ 55 weight-% |
| Chloride content (dry matter) | ≤ 0.4 weight-% |
| Fluoride content (dry matter) | ≤ 0.8 weight-% |
| Alkaline content (dry matter) | ≤ 1.8 weight-% |

The mixture according to the invention may have a pH (DIN EN ISO 10523) of ≥ 7 to ≤ 10, preferably ≥ 8 to ≤ 9.

The mixture according to the invention may be used as a starting material in a process which employs an aluminium oxide-containing starting material. Preferred processes are the production of cement or the production of mineral wool. Examples for cement types are Portland cement and calcium sulfoaluminate cement.

The present invention is furthermore directed towards the use of a zeolite for reducing the ammonia emission from an aluminium oxide composition, wherein the aluminium oxide composition has an Al₂O₃ content of ≥ 50 weight-% of dry matter and a metal nitride content of ≥ 0.01 weight-% of dry matter.

In an embodiment of the use according to the invention the aluminium oxide composition is a particulate solid with a d₈₀ value of the particle size distribution of ≤ 500 µm and/or the aluminium oxide composition has a content of metallic aluminium of ≤ 5 weight-% of dry matter.

In another embodiment of the use according to the invention the aluminium oxide composition has a moisture content of ≥ 1 weight-%. Preferably the moisture content is ≥ 10 to ≤ 20 weight-%.

In another embodiment of the use according to the invention the zeolite is distributed within the aluminium oxide composition. This may be achieved by mixing the materials thoroughly. Particularly preferred is an intensive mixing, the energy transfer of which into the composition being beneficial in breaking up aluminium oxide aggregates present after autogenic drying.

In another embodiment of the use according to the invention the weight ratio of aluminium oxide composition to the zeolite is ≥ 1:1 to ≤ 10000:1. Preferred is a weight ratio of aluminium oxide composition to the zeolite is ≥ 1:1 to ≤ 100:1, more preferred ≥ 1:1 to ≤ 5:1, even more preferred ≥ 1:1 to ≤ 2:1.

In another embodiment of the use according to the invention the zeolite is a used or unused fluid catalytic cracking catalyst. FCC catalysts are widely available. Even used catalysts which otherwise would be discarded may be used in the present invention. Without wishing to be bound by theory it is believed that hydrocarbon residues present in the used FCC catalyst additionally serve to shield A1N regions in the particles of the aluminium oxide composition from moisture.

In another embodiment of the use according to the invention the zeolite is zeolite Y.

The present invention will be further described with reference to the following examples without wishing to be limited by them.

As a zeolite a used fluid catalytic cracking catalyst was used. This was a zeolite Y with a pH (DIN EN ISO 10523) of 4.1 and a chemical composition according to the following analysis:

| | | | |
|---|---|---|---|
| SiO₂ | 39.50% | Na₂O | 0.50% |
| CaO | 0.40% | K₂O | 0.10% |
| MgO | 0.40% | C free | 0.15% |
| Al₂O₃ | 41.90% | CO₂ | 0.20% |
| TiO₂ | 0.80% | C total | 0.20% |
| Fe₂O₃ | 0.90% | S total | 0.95% |
| MnO₂ | 0.01% | H₂O 105 °C | 3.33% |
| P₂O₅ | 1.10% | H₂O 950 °C | 6.92% |

The particle size distribution according to a sieve analysis was:

| | |
|---|---|
| "smaller" | 32.60% |
| > 32 µm | 67.40% |
| > 45 µm | 50.70% |
| > 63 µm | 34.00% |
| > 90 µm | 16.50% |
| > 125 µm | 4.70% |
| > 250 µm | 0.00% |
| Sum of sieve fractions | 100.0% |

The aluminium oxide composition, obtained by recycling aluminium salt slag, had a pH (DIN EN ISO 10523) of 9.7 composition according to the following specification in its data sheet (dry material):

| | Min. | Max. |
|---|---|---|
| Al₂O₃ | 58.00% | 76.00% |
| SiO₂ | 2.00% | 14.00% |
| CaO | 1.30% | 3.80% |
| MgO | 6.50% | 10.20% |
| Fe₂O₃ | 0.90% | 2.80% |
| TiO₂ | 0.50% | 1.00% |
| k₂O | 0.40% | 1.20% |
| Na₂O | 0.40% | 1.20% |

The zeolite and the aluminium oxide composition were mixed in a weight ratio of zeolite : aluminium oxide composition of 2 : 1. The resulting mixture had a pH (DIN EN ISO 10523) of 8.2 and a composition according to the following analysis:

| | | | |
|---|---|---|---|
| Moisture at 105 °C | % | 13.85 | |
| Ammonia (calc.) | ppm | 1791.50 | |
| Ammonium (IC) | ppm | 1691.40 | |
| N (CHN-Analyser) | % | n.d. | |
| TOC (RC612) | % | 0.67 | |
| Chloride (potentiometry) | % | 0.31 | |
| Fluoride (Seel) | % | 0.78 | |
| Sulphur (CS-Analyser) | % | 0.30 | |
| BET | m²/g | 38.07 | |
| Blaine | cm²/g | 11750.00 | |
| Density | g/cm³ | 2.80 | |
| | | | Without L.o.I. |
| L.o.I. 1050 °C | % | 15.56 | |
| SiO₂ | % | 17.85 | 21.33 |
| Al₂O₃ | % | 53.86 | 64.35 |
| TiO₂ | % | 0.74 | 0.88 |
| MnO | % | 0.10 | 0.12 |
| Fe₂O₃ | % | 3.04 | 3.63 |
| CaO | % | 1.25 | 1.49 |
| MgO | % | 5.28 | 6.31 |
| K₂O | % | 0.43 | 0.51 |
| Na₂O | % | 0.71 | 0.85 |
| SO3 | % | 0.00 | 0.00 |
| P₂O₅ | % | 0.44 | 0.53 |
| Sum RFA (1050 °C) | % | 99.26 | 100 |

The following observations were made with respect to this mixture:
- Ammonia production ceased within 10 seconds of mixing, as determined by olfactory analysis
- Exothermic reactions ceased immediately after mixing
- Immediately after mixing, ammonia could be stripped out of the mixture by raising the pH; after 2 weeks of storing the mixture this was significantly decreased (at least by 90%)
- Aqueous extraction of a mixture which had been stored for over 2 weeks followed by evaporating the water did not lead to detectable ammonia emissions
- Raising the pH to > 12 by adding lime did not lead to ammonia emission from a mixture stored for a considerable amount of time
- Even after storing a mixture with ca. 15-20% moisture for 6 months no ammonia emissions could be detected

All of the experiments above would have led to ammonia emissions of over 1000 ppm in the original aluminium oxide composition.

## Claims

1. A method of reducing the ammonia emission from an aluminium oxide composition,
wherein the aluminium oxide composition has an Al₂O₃ content of ≥ 50 weight-% of dry matter and a metal nitride content of ≥ 0.01 weight-% of dry matter,
**characterised in that**
the method comprises the step of contacting the aluminium oxide composition aluminium with a zeolite, thereby obtaining a mixture of the aluminium oxide composition and a zeolite.

2. The method according to claim 1, wherein the aluminium oxide composition is a particulate solid with a d₈₀ value of the particle size distribution of ≤ 500 µm and/or the aluminium oxide composition has a content of metallic aluminium of ≤ 5 weight-% of dry matter.

3. The method according to claim 1 or 2, wherein the zeolite is distributed within the aluminium oxide composition.

4. The method according to one of claims 1 to 3, wherein the weight ratio of aluminium oxide composition to the zeolite is ≥ 1:1 to ≤ 10000:1.

5. The method according to one of claims 1 to 4, wherein the zeolite is a used or unused fluid catalytic cracking catalyst.

6. The method according to one of claims 1 to 5, wherein the zeolite is zeolite Y.

7. A mixture comprising an aluminium oxide composition and a zeolite,
wherein the aluminium oxide composition has an Al₂O₃ content of ≥ 50 weight-% of dry matter and a metal nitride content of ≥ 0.01 weight-% of dry matter,
**characterised in that**
the zeolite is a used or unused fluid catalytic cracking catalyst and that the composition has a gaseous ammonia emission of ≤ 5 mg NH₃ per gram of composition and hour.

8. The mixture according to claim 7, wherein the aluminium oxide composition is a particulate solid with a d₈₀ value of the particle size distribution of ≤ 500 µm and/or the aluminium oxide composition has a content of metallic aluminium of ≤ 5 weight-% of dry matter.

9. The mixture according to claim 7 or 8, wherein the zeolite is zeolite Y.

10. Use of a zeolite for reducing the ammonia emission from an aluminium oxide composition, wherein the aluminium oxide composition has an Al₂O₃ content of ≥ 50 weight-% of dry matter and a metal nitride content of ≥ 0.01 weight-% of dry matter.

11. The use according to claim 10, wherein the aluminium oxide composition is a particulate solid with a d₈₀ value of the particle size distribution of ≤ 500 µm and/or the aluminium oxide composition has a content of metallic aluminium of ≤ 5 weight-% of dry matter.

12. The use according to claim 10 or 11, wherein the aluminium oxide composition has a moisture content of ≥ 1 weight-%.

13. The use according to one of claims 10 to 12, wherein the weight ratio of aluminium oxide composition to the zeolite is ≥ 1:1 to ≤ 10000:1.

14. The use according to one of claims 10 to 13, wherein the zeolite is a used or unused fluid catalytic cracking catalyst.

15. The use according to one of claims 10 to 14, wherein the zeolite is zeolite Y.
